# EUROPEAN PATENT SPECIFICATION

(11) **EP 2 528 998 B1**
(45) Date of publication and mention of the grant of the patent: **19.09.2018**
(21) Application number: 11700693.2
(22) Date of filing: 25.01.2011
(51) Int. Cl.: C10J 3/46, C10J 3/82

(54) **GASIFICATION REACTOR AND PROCESS**
VERGASUNGSREAKTOR UND -VERFAHREN
RÉACTEUR ET PROCÉDÉ DE GAZÉIFICATION

(30) Priority: 25.01.2010 EP 10151517
(43) Date of publication of application: 05.12.2012
(73) Proprietor: Shell Internationale Research Maatschappij B.V., 2596 HR The Hague (NL)
(72) Inventor: VON KOSSAK-GLOWCZEWSKI, Thomas Paul, 51647 Gummersbach (DE)
(74) Representative: Shell Legal Services IP
(86) International application number: PCT/EP2011/050986
(87) International publication number: WO 2011/089268

(56) References cited:
- EP-A2- 0 870 818
- DE-A1- 3 601 786
- US-A- 4 859 213
- US-A1- 2008 000 155

## Description

The present invention relates to a gasification reactor and a process for the production of syngas by gasification of a carbonaceous feed, wherein the reactor comprises a gasifier unit with a discharge channel for discharging a stream of slag-loaded hot syngas and a quencher for supplying a flow of quench gas into the discharge channel.

In gasification processes for the production of synthetic gas, or syngas, carbonaceous feedstock, such as pulverized coal, is partially oxidised in a reactor. Initially, the syngas typically has a temperature of 1300 - 1600°C. The hot syngas contains liquid slag droplets. In order to avoid fouling on the heat exchangers, it is necessary to solidify the liquid slag droplets that are entrained in the gas leaving the gasifier, and to cool the liquid slag droplets to a temperature at which they are not sticky. This means that the entire gas stream leaving the gasifier must be cooled to a temperature that is well below the slag softening temperature. To this end, the hot syngas leaving the reactor is quenched to temperatures between 1000 - 700°C by feeding back cleaned and cooled syngas into the gas stream before it is transported to one or more heat exchangers. This recycled cooled gas is generally referred to as quench gas.

EP 0 347 986 A1 discloses an interchangeable quench gas injection ring with nozzles injecting cooled and recycled gas into the raw gas product as it leaves the reactor. The recycled cooled gas should be mixed into the hot syngas uniformly and a film of cool gas should be formed adjacent the wall where the supply line of the quench gas exits into the gas stream.

In operation, the hot syngas stream, typically flowing in upward direction, forms stalagmites and vertical upstanding beards of deposited slag where it is mixed with the cooled recycled gas. These slag deposits disturb the gas flow. If these deposits grow too large, the desired cool gas film cannot be obtained anymore and the cooled gas is mixed unevenly within the hot gas flow.

US4731097 provides a gasification reactor, comprising a device for cooling-a stream of hot producer gas exiting through gas discharge opening, the device having nozzles being connected to a plurality of water feeding conduits. A steam cone emanating from each of the nozzles is directed against the inner side of a pipe wall structure of an exhaust piece. An additional steam jet serves for an effective removal of deposits and possible bakings on the inner surface of the exhaust piece.

US5976203 provides a synthesis gas generator with combustion and quench chamber. The cooling by a cooling medium, preferably water, which is introduced into the useful gas via nozzle heads of nozzle assemblies, takes place in the quench chamber. The nozzle assemblies are equipped with both a coolant connection and a cold gas connection. If water is used as the cooling medium, nitrogen is used as a flushing and inertizing medium.

The object of the invention is to provide an effective way to prevent large slag deposits at the point where the quench gas is mixed into the hot gas flow.

The object is achieved with a gasification reactor according to claim 1 or a process according to claim 9.

This way, slag deposits can effectively be removed by activating the blaster. Since the blast nozzle is in line with the flow direction of the quench gas, it is able to blast away slag deposits possibly hindering the quench gas flow. It does not mean that the blast direction must be strictly parallel to the quench flow direction.

The at least one blaster can for example be connected to a source of pressurized blast gas selected from the group of syngas, nitrogen, carbon dioxide, steam and mixtures thereof.

In a particular embodiment, the blaster is divided into a plurality of compartments, each comprising one or more blast lances, whereby an even number of opposite compartments is operated symmetrically to mitigate the blast impulse into the center of the discharged syngas stream. The blaster can for example be divided into 4 - 16 compartments, for example 8 compartments, each compartment comprising a number of blast lances. By activating two opposite blaster compartments, symmetrical blasting can be achieved without the need to activate all blast lances simultaneously.

The slag beards typically grow on the upper peripheral edge of the gasifier unit where it opens into the gas discharge channel and where the hot syngas is quenched with the cool quench gas in a quench area. The quench area typically has a bottom sloping downwardly in the direction of the opening and making an acute angle with the horizontal, resulting in a sharp peripheral edge between the reactor and the quench area. If the blasted slag beards leave some remaining slag deposit on this peripheral edge, these residual deposits can initiate growth of new slag beards. In order to hinder this, the slag deposits should preferably be blasted away completely without leaving any residue. To this end, the blaster can be directed to this upper peripheral edge of the reactor. The blaster is preferably directed to blast under a blast angle which is 0,1 - 5 degrees steeper than the flow direction of the quench gas, which is substantially parallel to the sloping bottom of the quench area.

For effective cleaning, the blaster can comprise a number of blast lances extending in the radial direction of the discharge channel with an angle of 1 - 3 degrees between adjacent lances.

The at least one blaster can for instance be operated periodically. In order to blast the blast gas with optimum velocity, the pressure of the blast gas can, e.g., be kept 10 - 100 bar higher than the pressure of the discharged syngas. The gas can be blasted into the quench area with a velocity of, for example, 30 - 300 m/s.

To keep the blast nozzles open and free the blasters can be operated to release a continuous purge flow in addition to the periodically released blast flow. This also has the advantage that the blaster tips are cooled and protected against heat radiation from the syngas.

An exemplary embodiment of the invention will now be described by reference to the accompanying drawing, in which:
Figure 1: shows schematically a longitudinal cross section of a gasification reactor according to the present invention;
Figure 2: shows in detail a radial cross section of a quench section of the reactor of Figure 1;
Figure 3: shows in plan view the quench area of the reactor of Figure 1.

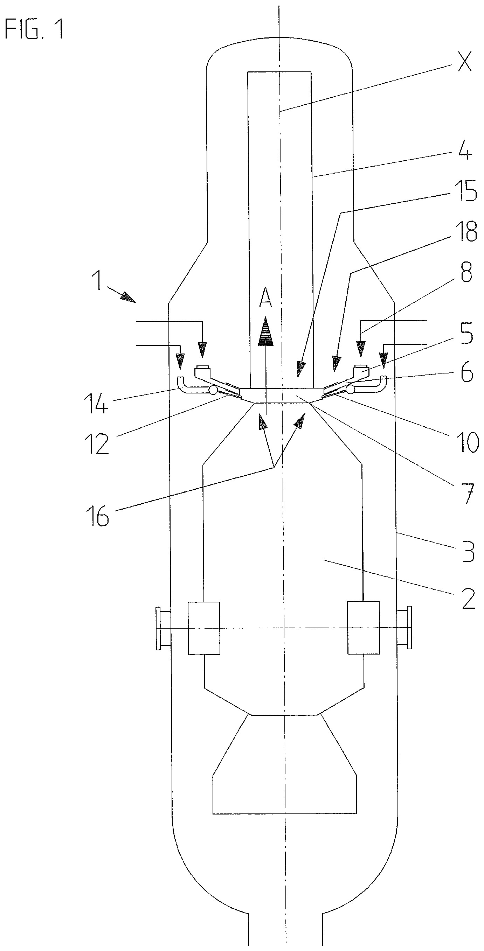

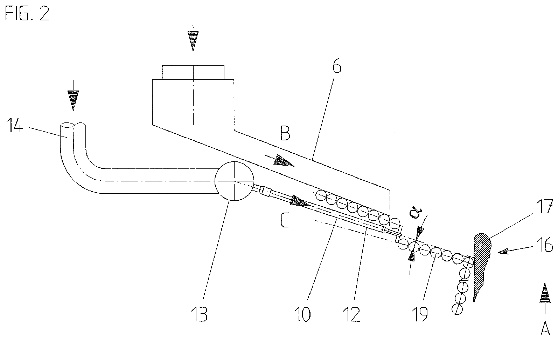

The gasification reactor 1 shown in Fig. 1 comprises a gasifier unit 2 in a vertically oriented elongated pressure container 3. The gasifier unit 2 is supplied with a carbonaceous feed, for example pulverized coal, which is partially combusted by a number of burners (not shown) in the gasifier unit 2 to form syngas. At its top end the gasifier unit 2 comprises an opening 15 which opens into a quench area 18. The quench area 18 has a slightly sloping bottom 19 around the opening 15 forming an acute upper peripheral edge 16. The quench area 18 forms the beginning of a discharge channel 4. In the quench area 18 a quench gas supply unit 5 is arranged to mix cool quench gas into the stream A of discharged hot syngas to cool down the syngas to below the softening point of the slag particles carried by the discharged syngas. Quenched syngas flows from the quench gas supply unit 5 in quench gas flow direction B (see Figure 2) into the discharge channel 4 and further downstream the quench gas supply unit 5 transporting the hot syngas to heat exchangers (not shown) for further cooling. The quench gas supply unit 5 comprises radially extending quench gas supply channels 6 in a circular arrangement coaxial with the discharge channel 4 and the gasifier unit 2. The quench gas supply channels 6 have an open end 7 directed towards the center line X of the discharge channel 4, while their other end is connected to a quench gas supply line 8. From the supply line 8 to the open end 7, the supply channels 6 slope downwardly.

When the discharged hot syngas is cooled down by the quench gas to a temperature below the softening point of the slag particles, these slag particles are deposited to form upstanding stalagmites 17, as shown in Figure 2.

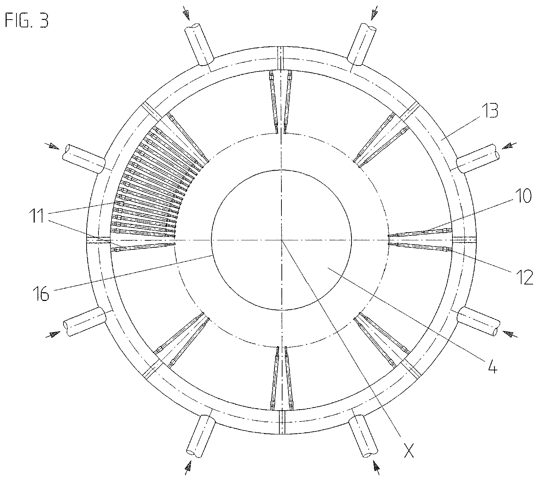

Near the quench supply unit 6 the reactor 1 is further provided with a blaster 10, as shown in more detail in Figure 2 and in plan view in Figure 3. The blaster 10 is built of eight compartments 11. Each compartment 11 comprises a plurality of radially extending blast lances 12. Each blast lance 12 makes an angle of about 2 degrees with the adjacent blast lance 12, resulting in an average distance of about 11 mm.

The blast lances 12 are directed to blast in a direction C (see Figure 2) in line with the quench flow direction B, so as to blast away slag deposits standing in the way of the quench gas flow B. The blaster 10 is directed to blast under an angle α with the sloping bottom 19 of the quench area 18. The angle α is preferably 0,1 - 5 degrees.

The slag deposits are particularly formed on the upper peripheral edge 16 at the top end of the gasifier unit 2. When the slag beards are blasted away, they may leave some remaining slag deposit on this peripheral edge 16, which can initiate growth of new slag beards. In order to hinder this, the slag deposits should preferably be blasted away completely without leaving any residue. To this end, the blaster 10 in this embodiment is directed to this upper peripheral edge 16 of the gasifier unit 2.

Each blast lance 12 is connected to a source of pressurized blast gas via a circular distribution line 13 which is connected to a supply line 14. The blast lances can blast the gas with a velocity of 30 - 300 m/s. The pressure of the blast gas is 10 - 100 bar higher than the pressure of the discharged syngas. Pairs of opposite compartments 11 are operated symmetrically to mitigate the blast impulse into the center X of the discharged syngas stream.

The blaster 10 is operated periodically to blast away slag deposits around the top end opening of the gasifier unit 2, where the hot syngas is cooled by the quench gas. The blaster 10 further releases a continuous purge flow in addition to the periodically released blast flow.

## Claims

1. A gasification reactor (1) for the production of syngas by gasification of a carbonaceous feed, wherein the reactor comprises:
a gasifier unit (2) with a discharge channel (4) for discharging a stream of slag-loaded hot syngas,
the gasifier unit comprising a syngas outlet (15) at its top end which opens into a quench area (18),
the quench area having a slightly sloping bottom (19) around the syngas outlet (15) forming an acute upper edge (16), the quench area forming the beginning of the discharge channel (4),
a quencher (5) for supplying a flow of quench gas into the discharge channel (4),
wherein at least one blaster (10) is arranged comprising at least one blast nozzle (12) in line with the flow direction (B) of the quench gas and
wherein the at least one blaster (10) is directed to the upper edge (16) of the syngas outlet of the gasifier unit (2) of the reactor (1) where the gasifier unit (2) opens into the discharge channel (4).

2. The gasification reactor according to claim 1 wherein the at least one blaster (10) is connected to a source of pressurized gas selected from the group of syngas, nitrogen, carbon dioxide, steam and mixtures thereof.

3. The gasification reactor of claim 1, the blaster (10) being directed to blast under a blast angle (α) which is 0,1 - 5 degrees steeper than the flow direction (B) of the quench gas, which is parallel to the sloping bottom of the quench area (18).

4. The gasification reactor according to any one of the preceding claims wherein the blaster (10) is divided into a plurality of compartments (11), each comprising one or more blast lances (12), whereby an even number of opposite compartments is adapted to be operated symmetrically to mitigate the blast impulse into the center of the discharged syngas stream.

5. The gasification reactor according to claim 4, wherein the blaster is divided into 4 - 16 compartments (11), each compartment comprising a number of blast lances (12).

6. The gasification reactor according to any one of the preceding claims wherein the quencher (5) is located in a quench area (18) with a bottom sloping downwardly to the upper edge (16) of the gasifier unit and wherein the blaster (10) is directed to blast under a blast angle which is 0,1 - 5 degrees steeper than the sloping bottom of the quench area (18).

7. The gasification reactor according to any one of the preceding claims wherein the blaster (10) comprises a number of blast lances (12) extending in the radial direction of the discharge channel (4) with an angle of 1 - 3 degrees between adjacent lances.

8. The gasification reactor according to any one of the preceding claims, the quencher (5) comprising radially extending quench gas supply channels (6) in a circular arrangement coaxial with the discharge channel (4) and the gasifier unit (2), the quench gas supply channels (6) having an open end (7) directed towards the center line (X) of the discharge channel (4), while their other end is connected to a quench gas supply line (8), wherein from the supply line (8) to the open end (7), the supply channels 6 slope downwardly.

9. A process for the production of syngas by gasification of a carbonaceous feed in a reactor (1) comprising a gasifier unit (2) opening into a discharge channel (4) for discharging a stream of slag-loaded hot syngas, the gasifier unit comprising a syngas outlet (15) at its top end which opens into a quench area (18), the quench area having a slightly sloping bottom (19) around the syngas outlet (15) forming an acute upper edge (16), the quench area forming the beginning of the discharge channel (4),
the process comprising the steps of:
supplying a flow of quench gas into the discharge channel (4) using a quencher (5),
periodically operating at least one blaster (10) comprising at least one blast nozzle (12) directed in line with the flow direction (B) of the quench gas ,
wherein the at least one blaster (10) is directed to the upper edge (16) of the syngas outlet of the gasifier unit (2) of the reactor (1) where the gasifier unit (2) opens into the discharge channel (4).

10. A process according to claim 9 wherein the pressure of the blast gas is 10 - 100 bar higher than the pressure of the discharged syngas.

11. A process according to claim 9 or 10 wherein at least a part of the blasters (10) is operated to release a continuous purge flow in addition to the periodically released blast flow.

12. A process according to any one of claims 9-11, wherein the blaster (10) is divided into a plurality of compartments (11), each comprising one or more blast lances (12), the process comprising the step of: operating an even number of opposite compartments symmetrically to mitigate the blast impulse into the center of the discharged syngas stream.

13. A process according to any one of claims 9-12, wherein the at least one blaster (10) blasts the gas with a velocity of 30 - 300 m/s.

## Patentansprüche

1. Vergasungsreaktor (1) für die Herstellung von Synthesegas durch Vergasung von einer kohlenstoffhaltigen Beschickung, wobei der Reaktor das Folgende umfasst:
eine Vergasereinheit (2) mit einem Entlassungskanal (4) zum Entlassen eines schlackebeladenen, heißen Synthesegasstroms,
wobei die Vergasereinheit an ihrem oberen Ende, das sich in einen Quenchbereich (18) öffnet, einen Synthesegasauslass (15) umfasst,
wobei der Quenchbereich um den Synthesegasauslass (15) herum einen leicht geneigten Boden (19) aufweist, wodurch ein spitzer, oberer Rand (16) gebildet wird, wobei der Quenchbereich den Anfang des Entlassungskanals (4) bildet,
einen Quencher (5) zum Zuführen von einer Quechgasströmung in den Entlassungskanal (4),
wobei mindestens ein Strahler (10) angeordnet ist, der mindestens eine Strahldüse (12) umfasst, die mit der Strömungsrichtung (B) des Quenchgases ausgerichtet ist, und
wobei der mindestens eine Strahler (10) auf den oberen Rand (16) des Synthesegasauslasses der Vergasereinheit (2) von dem Reaktor (1) gerichtet ist, dort, wo sich die Vergasereinheit (2) in den Entlassungskanal (4) öffnet.

2. Vergasungsreaktor nach Anspruch 1, wobei der mindestens eine Strahler (10) mit einer Quelle für Druckgas verbunden ist, das aus der Gruppe aus Synthesegas, Stickstoff, Kohlendioxid, Dampf und Mischungen davon ausgewählt ist.

3. Vergasungsreaktor nach Anspruch 1, wobei der Strahler (10) so ausgerichtet ist, dass er unter einem Strahlwinkel (α) einstrahlt, der 0,1 - 5 Grad steiler als die Strömungsrichtung (B) des Quenchgases ist, die parallel zu dem geneigten Boden des Quenchbereichs (18) ist.

4. Vergasungsreaktor nach einem der vorhergehenden Ansprüche, wobei der Strahler (10) in eine Vielzahl von Kompartimenten (11) unterteilt ist, von denen jedes eine oder mehrere Strahllanzen (12) umfasst, wobei eine gerade Anzahl an gegenüberliegenden Kompartimenten dafür geeignet ist, um symmetrisch betrieben zu werden, um den Strahlimpuls im Zentrum des entlassenen Synthesegasstroms abzuschwächen.

5. Vergasungsreaktor nach Anspruch 4, wobei der Strahler in 4 - 16 Kompartimente (11) unterteilt ist, wobei jedes Kompartiment eine Anzahl an Strahllanzen (12) umfasst.

6. Vergasungsreaktor nach einem der vorhergehenden Ansprüche, wobei der Quencher (5) in einem Quenchbereich (18) mit einem in Richtung des oberen Rands (16) der Vergasereinheit nach unten geneigten Boden angeordnet ist und wobei der Strahler (10) so ausgerichtet ist, dass er unter einem Strahlwinkel einstrahlt, der 0,1 - 5 Grad steiler als der geneigte Boden des Quenchbereichs (18) ist.

7. Vergasungsreaktor nach einem der vorhergehenden Ansprüche, wobei der Strahler (10) eine Anzahl an Strahllanzen (12) umfasst, die sich mit einem Winkel von 1 - 3 Grad zwischen benachbarten Lanzen in der radialen Richtung des Entlassungskanals (4) erstrecken.

8. Vergasungsreaktor nach einem der vorhergehenden Ansprüche, wobei der Quencher (5) in einer zirkulären Anordnung koaxial mit dem Entlassungskanal (4) und der Vergasereinheit (2) sich radial ausdehnende Quenchgaszufuhrkanäle (6) umfasst, wobei die Quenchgaszufuhrkanäle (6) ein offenes Ende (7) aufweisen, das auf die Mittellinie (X) des Entlassungskanals (4) gerichtet ist, während ihr anderes Ende mit einer Quenchgaszufuhrleitung (8) verbunden ist, wobei die Zufuhrkanäle 6 nach unten geneigt sind, und zwar von der Zufuhrleitung (8) zum offenen Ende (7).

9. Verfahren für die Herstellung von Synthesegas durch Vergasung von einer kohlenstoffhaltigen Beschickung in einem Reaktor (1), umfassend eine Vergasereinheit (2), die sich in einen Entlassungskanal (4) zum Entlassen eines schlackebeladenen, heißen Synthesegasstroms öffnet, wobei die Vergasereinheit an ihrem oberen Ende, das sich in einen Quenchbereich (18) öffnet, einen Synthesegasauslass (15) umfasst, wobei der Quenchbereich um den Synthesegasauslass (15) herum einen leicht geneigten Boden (19) aufweist, wodurch ein spitzer, oberer Rand (16) gebildet wird, wobei der Quenchbereich den Anfang des Entlassungskanals (4) bildet,
wobei das Verfahren die folgenden Schritte umfasst:
Zuführen von Quenchgasströmung in den Entlassungskanal (4), wobei ein Quencher (5) verwendet wird,
periodisches Betreiben von mindestens einem Strahler (10), der mindestens eine Strahldüse (12) umfasst, die mit der Strömungsrichtung (B) des Quenchgases ausgerichtet ist, und
wobei der mindestens eine Strahler (10) auf den oberen Rand (16) des Synthesegasauslasses der Vergasereinheit (2) von dem Reaktor (1) gerichtet ist, dort, wo sich die Vergasereinheit (2) in den Entlassungskanal (4) öffnet.

10. Verfahren nach Anspruch 9, wobei der Druck des Strahlgases 10 - 100 bar höher als der Druck des ausgelassenen Synthesegases ist.

11. Verfahren nach Anspruch 9 oder 10, wobei mindestens ein Teil des Strahlers (10) betrieben wird, um zusätzlich zu der periodisch freigesetzten Strahlströmung eine kontinuierliche Spülströmung freizusetzen.

12. Verfahren nach einem der Ansprüche 9-11, wobei der Strahler (10) in eine Vielzahl von Kompartimenten (11) unterteilt ist, von denen jedes eine oder mehrere Strahllanzen (12) umfasst, wobei das Verfahren die folgenden Schritte umfasst:
symmetrisches Betreiben von einer geraden Anzahl an gegenüberliegenden Kompartimenten, um den Strahlimpuls im Zentrum des entlassenen Synthesegasstroms abzuschwächen.

13. Verfahren nach einem der Ansprüche 9-12, wobei der mindestens eine Strahler (10) das Gas mit einer Geschwindigkeit von 30 - 300 m/s einstrahlt.

## Revendications

1. Réacteur de gazéification (1) pour la production d'un gaz de synthèse par gazéification d'une charge carbonée, dans lequel le réacteur comprend :
une unité de gazéificateur (2) avec un canal d'évacuation (4) destiné à évacuer un flux de gaz de synthèse chaud chargé dans un laitier,
l'unité de gazéificateur comprenant une sortie de gaz de synthèse (15) au niveau de son extrémité supérieure, qui s'ouvre sur une zone de trempe (18),
la zone de trempe ayant une partie inférieure légèrement en pente (19) autour de la sortie de gaz de synthèse (15) qui forme une arête vive supérieure (16), la zone de trempe formant le début du canal d'évacuation (4),
un extincteur (5) destiné à fournir un flux de gaz de trempe au canal d'évacuation (4),
dans lequel au moins un souffleur (10) est prévu et comprend au moins une buse de soufflage (12) alignée avec la direction d'écoulement (B) du gaz de trempe, et
dans lequel le au moins un souffleur (10) est orienté vers le bord supérieur (16) de la sortie de gaz de synthèse de l'unité de gazéificateur (2) du réacteur (1), dans lequel l'unité de gazéificateur (2) s'ouvre dans le canal d'évacuation (4).

2. Réacteur de gazéification selon la revendication 1, dans lequel le au moins un souffleur (10) est relié à une source de gaz pressurisé choisi parmi le groupe consistant en un gaz de synthèse, de l'azote, du dioxyde de carbone, de la vapeur et des mélanges de ceux-ci.

3. Réacteur de gazéification selon la revendication 1, le souffleur (10) étant orienté afin de provoquer une explosion à un angle (α) qui est 0,1 à 5 degrés plus prononcé que la direction d'écoulement (B) du gaz de trempe, qui est parallèle à la partie inférieure en pente de la zone de trempe (18).

4. Réacteur de gazéification selon l'une quelconque des revendications précédentes, dans lequel le souffleur (10) est divisé en une pluralité de compartiments (11), qui comprennent chacun une ou plusieurs lances de soufflage (12), moyennant quoi un nombre pair de compartiments opposés est adapté pour être déclenché symétriquement afin d'atténuer l'impulsion d'explosion au centre du flux de gaz de synthèse évacué.

5. Réacteur de gazéification selon la revendication 4, dans lequel le souffleur est divisé en 4 à 16 compartiments (11), chaque compartiment comprenant un nombre de lances de soufflage (12).

6. Réacteur de gazéification selon l'une quelconque des revendications précédentes, dans lequel l'extincteur (5) se trouve dans une zone de trempe (18) avec une partie inférieure inclinée vers le bas, vers le bord supérieur (16) de l'unité de gazéificateur, et dans lequel le souffleur (10) est orienté pour provoquer une explosion à un angle qui est 0,1 à 5 degrés plus prononcé que la partie inférieure en pente de la zone de trempe (18).

7. Réacteur de gazéification selon l'une quelconque des revendications précédentes, dans lequel le souffleur (10) comprend un nombre de lances de soufflage (12) qui s'étendent dans la direction radiale du canal d'évacuation (4) avec un angle de 1 à 3 degrés entre les lances adjacentes.

8. Réacteur de gazéification selon l'une quelconque des revendications précédentes, l'extincteur (5) comprenant des canaux d'alimentation en gaz de trempe qui s'étendent radialement (6) selon un agencement circulaire coaxial avec le canal d'évacuation (4) et l'unité de gazéificateur (2), les canaux d'alimentation en gaz de trempe (6) ayant une extrémité ouverte (7) orientée vers la ligne centrale (X) du canal d'évacuation (4), tandis que l'autre extrémité est reliée à une conduite d'alimentation en gaz de trempe (8), dans lequel les canaux d'alimentation (6) sont inclinés vers le bas entre la conduite d'alimentation (8) et l'extrémité ouverte (7).

9. Processus de production d'un gaz de synthèse par gazéification d'une charge carbonée dans un réacteur (1) comprenant une unité de gazéificateur (2) qui s'ouvre sur un canal d'évacuation (4) destiné à évacuer un flux de gaz de synthèse chaud chargé dans un laitier, l'unité de gazéificateur comprenant une sortie de gaz de synthèse (15) au niveau de son extrémité supérieure, qui s'ouvre sur une zone de trempe (18), la zone de trempe ayant une partie inférieure légèrement en pente (19) autour de la sortie de gaz de synthèse (15), qui forme une arête vive supérieure (16), la zone de trempe formant le début du canal d'évacuation (4),
le processus comprenant les étapes consistant à :
fournir un flux de gaz de trempe au canal d'évacuation (4) à l'aide d'un extincteur (5),
faire fonctionner périodiquement au moins un souffleur (10) comprenant au moins une buse de soufflage (12) alignée avec la direction d'écoulement (B) du gaz de trempe,
dans lequel le au moins un souffleur (10) est orienté vers le bord supérieur (16) de la sortie de gaz de synthèse de l'unité de gazéificateur (2) du réacteur (1) dans lequel l'unité de gazéificateur (2) s'ouvre sur le canal d'évacuation (4).

10. Processus selon la revendication 9, dans lequel la pression du gaz de soufflage est 10 à 100 bar supérieure à la pression du gaz de synthèse évacué.

11. Processus selon la revendication 9 ou 10, dans lequel au moins une partie des souffleurs (10) est déclenchée afin de libérer un flux de purge continu en plus du flux de soufflage libéré de manière périodique.

12. Processus selon l'une quelconque des revendications 9 à 11, dans lequel le souffleur (10) est divisé en une pluralité de compartiments (11), qui comprennent chacun une ou plusieurs lances de soufflage (12), le processus comprenant l'étape qui consiste à :
déclencher un nombre pair de compartiments opposés de manière symétrique afin d'atténuer l'impulsion de soufflage au centre du flux de gaz de synthèse évacué.

13. Processus selon l'une quelconque des revendications 9 à 12, dans lequel le au moins un souffleur (10) souffle le gaz à une vitesse de 30 à 300 m/s.
